# EUROPÄISCHE PATENTSCHRIFT

(11) **EP 1 309 386 B1**
(45) Veröffentlichungstag und Bekanntmachung des Hinweises auf die Patenterteilung: **14.12.2005**
(21) Anmeldenummer: 01969219.3
(22) Anmeldetag: 04.08.2001
(51) Int. Cl.: B01D 46/52

(54) **FLEXIBLER FILTER**
FLEXIBLE FILTER
FILTRE FLEXIBLE

(30) Priorität: 18.08.2000 DE 10040534
(43) Veröffentlichungstag der Anmeldung: 14.05.2003
(73) Patentinhaber: helsa-automotive GmbH & Co. KG, 95482 Gefrees (DE)
(72) Erfinder: FÖTTINGER, Peter, 95448 Bayreuth (DE); TRNETSCHEK, Steffan, 95482 Gefrees (DE); LUDWIG, Joachim, 86673 Bergheim (DE); HANISCH, Wolfgang, 95502 Himmelskron (DE)
(74) Vertreter: LOUIS, PÖHLAU, LOHRENTZ
(86) Internationale Anmeldenummer: PCT/DE2001/003011
(87) Internationale Veröffentlichungsnummer: WO 2002/013947

(56) Entgegenhaltungen:
- WO-A-95/05235
- DE-A- 4 039 288
- DE-A- 19 545 046
- US-A- 5 779 747

## Beschreibung

Die Erfindung betrifft einen Filter mit den Merkmalen des Oberbegriffs des Anspruchs 1 und eine Filtereinrichtung mit einem solchen Filter sowie ein Verfahren zur Herstellung eines Filters mit den Merkmalen des Oberbegriffs des Anspruchs 18.

Ein derartiger Filter mit einem Faltenfilterpack ist aus DE 41 38 948 A1 bekannt. Die nach außen auskragende flexible Blende ist mit den quer zu den Faltenmündungen verlaufenden Randstreifen verbunden. Die flexible Blende ist Bestandteil eines Dichtrahmens, der aus der umlaufenden flexiblen Blende und den quer zu den Falten verlaufenden Randstreifen besteht. Die Endfalten des Faltenfilterpacks sind hoch geklappt, auf der auskragenden Blende aufliegend verklebt. Die nach außen auskragende Blende bildet eine zwischen dem Gehäuseoberteil und dem Gehäuseunterteil eingeklemmte Dichtung.

Aus DE 40 39 288 A1 ist ein ähnlicher Filter mit einem Faltenfilterpack bekannt. Im Unterschied zu der aus DE 41 38 948 A1 bekannten Filterkonstruktion sind die Endfalten nicht einfach umgeklappt auf der auskragenden Blende aufliegend aufgeklebt, sondern als Mehrfachfalte zusammengeklebt unter Ausbildung eines stimseitigen Stegs, der den Faltenfilterpack im Endfaltenbereich in Art eines stirnseitigen Stegs begrenzt.

Ein anderer Filter mit einem Faltenfilterpack ist aus DE 198 56 520 A1 bekannt. Die nach außen auskragende Blende ist bei dieser Filterkonstruktion an einem aus Filtermaterial bestehenden Rahmenteil ausgebildet, der den Faltenfilterpack umgibt. Das Rahmenteil ist als randseitig geschlossenes kastenförmiges Tiefziehteil ausgebildet. Das Tiefziehteil bildet in erster Linie eine Abdichtung. Die auskragende Blende bildet eine zwischen dem Oberteil und dem Unterteil des Gehäuses eingespannte Quetschdichtung. Die konstruktive und materialmäßige Ausgestaltung des den Rahmen bildenden Tiefziehteils gewährleistet keine ausreichende Flexibilität und erbringt keine optimale Stabilisierung des Faltenfilterpacks.

Aus DE 88 08 632 U1 ist ein Faltenfilterpack bekannt, der einen Tragrahmen mit nach außen auskragendem flanschartigen Fortsatz aus Polyurethan aufweist. Dieser Tragrahmen ist unmittelbar am unteren Rand des Faltenfilterpacks angegossen.

Aus DE 42 27 744 A1 ist ein Filter bekannt, bei dem der Faltenfilterpack einen umlaufenden Kunststoffrahmen aufweist, an dessen Außenseite ebenfalls umlaufend ein Schaumstoffstreifen aufgeklebt ist. Diese Konstruktion weist keine nach außen auskragende flexible Blende auf. Zur Stabilisierung sind zwei parallele Armierungsstreifen vorgesehen, die auf der Oberseite des Faltenfilterpacks quer zu den Falten entlang der Filterlängsrichtung verlaufend aufgeklebt sind.

Aus DE 42 15 260 A1 ist ein Filter mit einem Faltenfilterpack bekannt, der einen Rahmen aus einem umlaufenden Schaumstoffstreifen aufweist. Auf dem Schaumstoffstreifen ist ein äußerer Rahmen mit nach außen auskragender Blende fixiert. Diese Filterkonstruktion ist nicht flexibel, denn bei dem Schaumstoff soll es sich um einen mit Klebstoff zu tränkenden Schaumstoff handeln, der nach dem Aushärten einen starren Rahmen bilden soll.

Aus DE 195 45 046 C2 ist ein Filter bekannt, bei dem das streifenförmige Randelement als Armierungselement in Form eines relativ dünnen Streifens ausgebildet ist. Der Streifen ist bezüglich der Höhe des Faltenfilterpacks jeweils außermittig aufgeklebt, um zu erreichen, daß der Filter nur in einer Richtung biegbar ist. Der Filter ist aber mit dieser speziellen Armierung relativ unstabil und nicht ohne weiteres betriebssicher. Er benötigt für einen sicheren, abgedichteten Sitz in der Filteraufnahme noch zusätzliche stabilisierende und abdichtende Elemente in der Filteraufnahme

Aus der EP 0 713 421 B1 (WO-A-9 505 285) ist eine andere Filterkonstruktion bekannt. Zur Stabilisierung des Faltenfilterpacks sind in den einzelnen Falten des gefalteten Filtermediums aus Kunststoff bestehende Stützelemente in Form von dreieck- oder trapezförmigen Elementen angeordnet. Diese Elemente sind mit dem Filtermaterial durch Einspritzen oder Ultraschallverschweißen verbunden. Die in Art von Kettengliedern nebeneinandergereihten Stützelemente erlauben ein begrenztes Verbiegen des Filters in entgegengesetzte Richtungen. Besonders nachteilig bei diesem Filter ist, daß zur Herstellung ein sehr großer fertigungstechnischer Aufwand erforderlich ist. Ferner ergibt sich aufgrund des zur Fixierung der Stützelemente am Filtermaterial zum Einsatz kommenden UV-Schweißens oder Einspritzverfahrens eine Einschränkung hinsichtlich der verwendbaren Filtermaterialien. Ferner ist mit der Verwendung der Stützelemente der Einsatz von speziell gestaltetem Filtermaterial erforderlich, d.h. es kann nur Filtermaterial eingesetzt werden, deren Faltung an die Formgestaltung der Stützelemente angepaßt ist.

Aus DE 43 45 129 A1 ist ein anders aufgebauter Filter bekannt. Bei diesem Filter ist das plissierte Filtermedium auf parallelen Klebstoffstreifen, die auf einer Trägerfolie aufgebracht sind, fixiert. Die Faltenkanten des Filtermediums greifen dabei zur Fixierung in die Klebstoffstreifen ein. Der Filter wird in ein kastenförmiges Gehäuse eingesetzt, wobei durch die parallelen Klebstoffstreifen eine als Strömungsberuhiger wirkende Zone ausgebildet ist, um eine quasi laminare Strömung und verminderten Strömungswiderstand des Filters zu erhalten. Bei Ausführungen, bei denen nach der Fixierung des Filters auf den parallelen Klebstoffstreifen die Trägerfolie abgezogen wird, wird der Filter gegen Stauchung in Längs- und Querrichtung sehr instabil. Außerdem ergibt sich mit den in Längsrichtung die Faltenkanten schneidenden parallelen Klebestreifen bei sämtlichen Ausführungen dieses Filters mit und ohne Trägerfolie aber eine nachteilige Reduktion der Filterfläche.

Andere Filterkonstruktionen sind bekannt aus EP 0 170 643 A2, WO 97/10040 und EP 0 438 639 A1. Bei diesen Filtern ist der Faltenfilterpack jeweils an seinen quer zur Faltung verlaufenden Stirnseiten über komplementär ineinandergreifende verzahnte starre Befestigungsteile formschlüssig gehalten. Zur Herstellung ergibt sich damit jeweils ein relativ großer Aufwand. Außerdem sind diese Filter nicht flexibel.

Aus GB 1 570 385, DE 41 43 237 A1 und DE 40 10 732 A1 sind ebenfalls Filter mit Faltenfilterpack aus plissiertem Filtermedium bekannt. Auch diese Filter weisen jeweils einen starren Rahmen auf, so daß sie nicht flexibel sind.

Ein weiterer Filter ist aus EP 0 380 026 bekannt. Bei diesem Filter sind plane Filtermedien vorgesehen, die in gekrümmte Führungsnuten eines flexiblen Filterrahmens einschiebbar sind. Der Einsatz von Faltenfiltem ist nicht möglich.

Der Erfindung liegt die Aufgabe zugrunde, einen flexiblen Filter, vorzugsweise einen in zwei Gegenrichtungen flexiblen Filter zu schaffen, der in der Herstellung einfach und im Betrieb sicher ist. Der Filter soll hohe Flexibilität für eine Biegung um parallel zu den Falten verlaufende Achsen aufweisen und dabei hohe Stabilität gegen Stauchung oder eine Verwindung um eine quer oder schräg zu den Falten verlaufende Längsachse haben. Es soll auch ein Verfahren zur Herstellung eines solchen Filters geschaffen werden.

Die Erfindung löst diese Aufgabe mit einem Filter gem. Patentanspruch 1 und einem Verfahren zur Herstellung eines Filters gem. Patentanspruch 18.

Der Filter besteht aus dem Filterpack mit den quer zu den Faltenmündungen verlaufenden, an den betreffenden Längsseiten des Faltenfilterpacks fixierten flexiblen streifenförmigen Randelementen und einem auf dem Faltenfilterpack zu montierenden einstückigen Kunststoffrahmen bestehend aus einer nach außen auskragenden umlaufenden flexiblen Blende und nach unten auskragenden Querstegen, die im Bereich der Endfalten des Faltenfilterpacks parallel zu diesen angeordnet sind. Anstelle der umlaufenden flexiblen Blende kann der Kunststoffrahmen auch flexible Blenden aufweisen, die jeweils nur an den quer zu den Faltenmündungen verlaufenden Längsseiten des Faltenfilterpacks nach außen auskragend, zur Anordnung kommen und über die Querstege miteinander verbunden sind.

Der Filter erhält aufgrund der Anordnung und des Zusammenwirkens der auf den Längsseiten des Faltenfilterpacks fixierten flexiblen Randelementen und der auskragenden flexiblen Blende in Verbindung mit den parallel zu den Endfalten verlaufenden Querstegen kontrollierte Flexibilität für eine Verbiegung in einer Richtung senkrecht zur Erstreckungsrichtung des Faltenfilterpacks und zwar jedoch nur zur Biegung um parallel zur Faltung verlaufende Querachsen bei gleichzeitiger Versteifung gegen eine Biegung um quer oder schräg zu der Faltung verlaufenden Längsachsen. Außerdem wird gleichzeitig einer Stauchung in Längs- und Querrichtung entgegengewirkt.

Die flexiblen Randelemente, die an den quer zur Faltung verlaufenden Stirnseiten des Faltenfilterpacks fixiert sind, bringen neben einer Fixierung der Faltenabstände und der daraus sich ergebenden Stabilisierung der Anordnung des plissierten Filtermediums zusätzlich noch die Möglichkeit, eine stirnseitige Abdichtung und einen sicheren Sitz des Faltenfilterpacks in der Filteraufnahme zu erhalten. Das Randelement kann aus Schaum, z.B. Polyurethanschaum, oder aus Vlies, insbesondere aus PES, PA; Polyolefin-Fasern oder deren Mischungen, insbesondere Bikomponenten, ausgebildet sein. Die Fixierung des Randelementes an dem Filtermedium kann über eine Klebeverbindung, z.B. einen Klebstoff auf Polyolefin-, PES-, PA- oder PU-Basis, vorzugsweise mit Flexibilitätszusatz, z.B. Harz, ausgebildet sein. Diese Klebeverbindung kann elastisch ausgebildet sein. Vorzugsweise ist sie auch dicht ausgebildet, so daß über das an der Stirnseite des Faltenfilterpacks aufgeklebte Randelement ein in diesem Bereich gegen ein Umströmen dichter Abschluß erhalten wird. Alternativ kann die Fixierung der flexiblen Randelemente über Verschweißen erfolgen.

Die flexible Blende ist aufgrund ihrer im Bereich der stimseitigen Randelemente auskragenden Anordnung bei entsprechend dünnwandiger, vorzugsweise flächiger Ausgestaltung, in Richtung senkrecht zu ihrer Erstreckungsebene in beide Gegenrichtungen senkrecht zur Erstreckungsebene des Filters flexibel, d.h. sie kann nach oben und nach unten elastisch verbogen werden. Sie verhindert jedoch dabei eine Stauchung in ihrer Erstreckungsebene, d.h. eine Stauchung in Längs- und Querrichtung des Filters. Die flexible Blende ist vorzugsweise aus gegenüber dem Filtermedium anderen Material ausgebildet, insbesondere als Spritzgußteil. Bei dem Material kann es sich um PP mit geringen Talkumanteil handeln. Die flexible Blende kann aber auch aus Metall, z.B. als dünnwandiges Blechteil ausgebildet sein.

Der Filter kann als im wesentlichen quaderförmiger Körper ausgebildet sein, der an seinen längs und quer verlaufenden Stirnseiten jeweils geschlossen ist und zwar an den quer zur Faltung verlaufenden Stirnseiten über die dort fixierten vorzugsweise streifenförmigen Randelemente und an den längs zur Faltung verlaufenden Stirnseiten über die an der flexiblen Blende abstehend angeformten Frontstege. Vorzugsweise sind die streifenförmigen Randelemente und die Frontstege jeweils gleich hoch und erstrecken sich jeweils über die gesamte Höhe des Faltenfilterpacks.

Bei anderen Ausführungen ist die flexible Blende nicht als umlaufender Rahmen ausgebildet, sondern an den beiden gegenüberliegenden stimseitigen Randelementen ist jeweils eine vorzugsweise separate, von diesen auskragende flexible Blende angeordnet. Diese Blenden erstrecken sich in entsprechender Weise wie die zuvor beschriebene umlaufende Blende vorzugsweise in einer gemeinsamen Ebene, vorzugsweise parallel zur Erstreckungsebene des Faltenfilterpacks oder fluchtend mit dieser. Der so ausgerüstete Filter erhält damit ebenfalls kontrollierte Flexibilität in Richtung senkrecht zur Erstreckungsebene des Faltenfilterpacks. Er ist damit in beide Gegenrichtungen, d.h. nach oben und nach unten elastisch biegbar. Gleichzeitig wird aufgrund der Blenden einer Stauchung zumindest in Längsrichtung des Filters entgegengewirkt.

In Verbindung mit den parallel zur Faltung verlaufenden Querstegen, die im Bereich der Endfalten angeordnet sein können und die die in der Erstreckungsebene des Faltenfilterpacks nach außen auskragenden Blenden miteinander verbinden, wird eine Stabilität des Filters gegen eine Biegung um eine quer oder schräg zur Faltung verlaufenden Längsachse erhalten.

Aufgrund der flexiblen Blende wird ein sicherer Sitz des Filters in der Filteraufnahme ermöglicht. Die Blende, die an der Anströmseite oder an der Abströmseite des Faltenfilterpacks oder in einem Bereich zwischen Anströmseite und Abströmseite angeordnet sein kann, liegt bei bevorzugten Ausführungen in einem Auflager der Filteraufnahme an. Sie kann dort in eine entsprechende Fassung eingreifen oder auf der Außenseite in einem Randbereich, der die Aufnahmeöffnung der Filteraufnahme begrenzt, anliegen. Mit dieser Anlage kann eine feste Halterung des Filters in der Filteraufnahme und gleichzeitig eine Abdichtung erhalten werden. Die flexible Blende kann hierbei selbst als Dichtung gegenüber der Filteraufnahme dienen. Es können aber auch separate Dichtungselemente zwischengeschaltet sein.

Durch die Anordnung der auskragenden flexiblen Blende kann beim Einbau des Filters in die Filteraufnahme die Verwechslung von An- und Abströmseite verhindert werden. Die flexible Blende kann nämlich anströmseitig oder abströmseitig angeordnet werden, so daß sich eine insoweit unsymmetrische Ausgestaltung des Filters ergibt und der Filter nur in einer bestimmten Orientierung, d.h. in korrekter Position in die Filteraufnahme eingesetzt werden kann.

Die auskragende flexible Blende kann außerdem beim Einführen des Filters in die Filteraufnahme mit einer entsprechenden Führungseinrichtung in der Filteraufnahme zusammenwirken, d.h. es können z.B. die Außenkanten der flexiblen Blende in entsprechenden Führungsschienen beim Einführvorgang geführt werden. Der Filter kann damit ohne zu verkanten und ohne Gefahr einer mechanischen Beschädigung auf einfache Weise sicher in die Filteraufnahme eingeführt werden. Diese Einführhilfe ist insbesondere bei schwer zugänglichen Filteraufnahmen vorteilhaft.
Eine Erleichterung des Einführvorgangs wird auch durch die Flexibilität des Filters erhalten. Der Filter kann in gebogenem Zustand in die Filteraufnahme eingebracht werden. In der Filteraufnahme erfolgt über die Rückstellkraft der elastischen Verformung selbsttätig die Einstellung eines korrekten Sitzes des Filters in der Filteraufnahme. Ober die elastische Verformung der auskragenden flexiblen Blende wird die erforderliche elastische Rückstellkraft erhalten. Die flexible Blende dient beim elastischen Rückstellen als ein mit der Filteraufnahme zusammenwirkendes Auflager, welches die korrekte Positionierung des Filters in Funktionsstellung in der Filteraufnahme sicherstellt.

Der flexible Filter kann in Filteraufnahmen unterschiedlichster Gestaltung eingesetzt werden. Es sind Filteraufnahmen möglich, bei denen der Filter in seiner Funktionsstellung in ebener Ausrichtung positioniert ist. Der flexible Filter kann aber auch in Filteraufnahmen eingesetzt werden, in denen er in seiner Funktionsstellung in gebogenem Zustand vorliegt. Es können hierfür Filterausführungen eingesetzt werden, die in ihrem Ruhezustand eben ausgerichtet sind und in ihrer Funktionsstellung flexibel gebogen vorliegen. Über die auskragende flexible Blende, die vorzugsweise in eine entsprechende Halterung in der Filteraufnahme eingreift, kann der Filter in diesem flexibel gebogenen Zustand stabil gehalten werden.

Aufgrund der flexiblen Ausbildung des Filters mit seiner auskragenden flexiblen Blende ist es möglich, den Filter in Filteraufnahmen unterschiedlicher gebogener Form einzusetzen. Der in der Regel im uneingebauten Zustand eben ausgerichtete Filter kann vorteilhafterweise im Versand und in der Lagerung im nicht gebogenen Zustand vorliegen, was den Platzbedarf des Filters gegenüber entsprechend permanent gebogenen Filtern erheblich vermindert.

Mit dem Verfahren gemäß Anspruch 18 ergibt sich eine einfache Herstellung eines flexiblen Filters. Das Verfahren betrifft die Herstellung eines Filters mit einem flexiblen Faltenfilterpack aus plissiertem flexiblem Filtermedium und sieht vor, daß in einem ersten Schritt an gegenüberliegenden, quer zu den Falten verlaufenden Stirnseiten des Faltenfilterpacks jeweils ein flexibles Randelement fixiert wird und sodann in einem zweiten Schritt an dem flexiblen Randelement und/oder an dem Filtermedium eine flexible Blende fixiert wird, die im Bereich mindestens eines der Randelemente nach außen, in Richtung vom Faltenfilterpack weg, auskragt. Die Fixierung des flexiblen Randelementes an den Stirnseiten des Faltenfilterpacks kann durch Kleben oder Verschweißen erfolgen. Ebenfalls durch Kleben oder Verschweißen kann die Fixierung der flexiblen Blende an dem Randelement oder an dem Filtermedium des Faltenfilterpacks erfolgen. Besonders vereinfachte Herstellung ergibt sich, wenn das Faltenfilterpack mit den daran angeordneten Randelementen als separate erste Baueinheit gefertigt wird und die flexible Blende, vorzugsweise als um den Faltenfilterpack umlaufend auskragende Blende als separate zweite Baueinheit gefertigt wird und sodann der Filter unter Kombination der ersten Baueinheit mit der zweiten Baueinheit gefertigt wird.

Weitere Einzelheiten, Merkmale und Vorteile ergeben sich aus der nachfolgenden Beschreibung von in der Zeichnung schematisch und nicht maßstabsgetreu gezeichneten Ausführungsbeispielen. Dabei zeigt
- Figur 1: eine perspektivische Explosionsdarstellung eines ersten Ausführungsbeispieles des Filters;
- Figur 2: eine perspektivische Darstellung des Filters in Figur 1 in zusammengebautem Zustand;
- Figur 4: eine perspektivische Darstellung des in den Figuren 1 und 2 dargestellten Filters in 5-förmig gebogener Einbaustellung in einer nicht dargestellten S-förmigen Filteraufnahme.

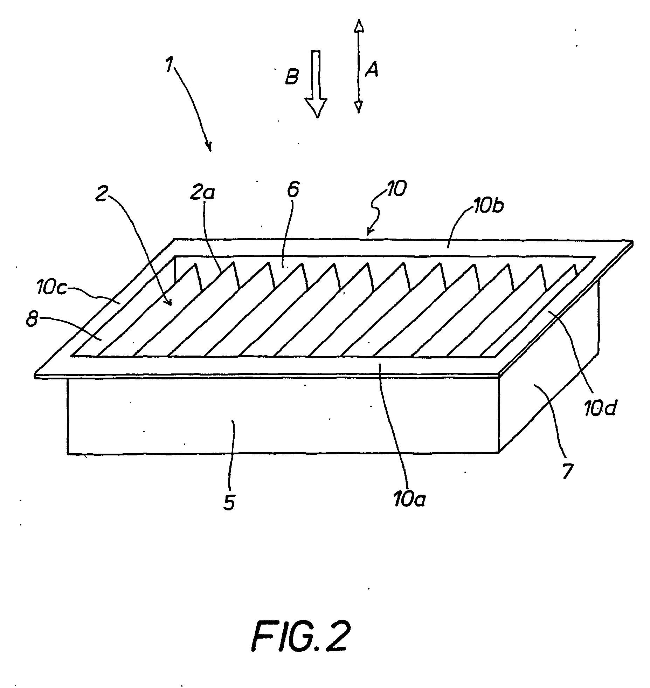

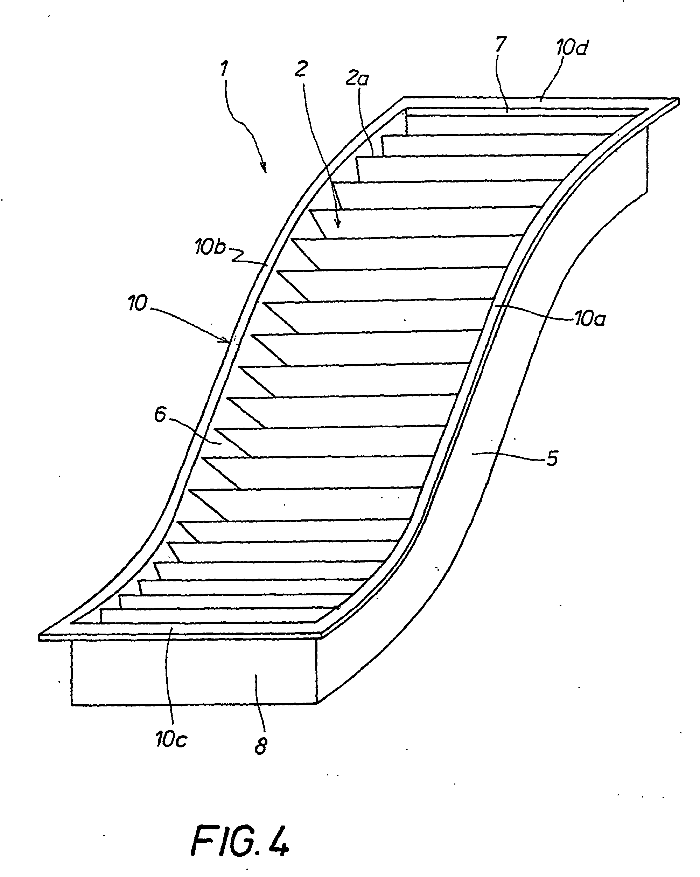

Der Filter 1 ist bei dem ersten Ausführungsbeispiel als ein im wesentlichen quaderförmiger Körper ausgebildet (Fig.2). Er weist einen Fattenfilterpack 2 aus plissiertem Filtermedium auf. Bei dem plissierten Fitlermedium handelt es sich um ein zickzackförmig gefaltetes Filterpapier oder Filtervlies. Es weist in Längsrichtung des Filters hintereinander angeordnete parallele Falten 2a auf. Bei dem dargestellten Ausführungsbeispiel ist das Filtermedium einlagig, d.h. das Filtermedium liegt in nur einer zickzackförmigen Schicht vor.

Der Körper des Filters 1 weist an seinen Stirnseiten geschlossene Außenwände auf, und zwar quer zu den Falten 2a verlaufende Stimwände 5, 6 und parallel zu den Falten 2a verlaufende Stirnwände 7,8. An der oberen Kante der Stimwände 5 bis 8 ist ein von den Stirnwänden rechtwinklig ausschließlich nach außen in Richtung vom Faltenfilterpack 2 weg gerichtet auskragende flexible Blende 10 angeordnet. Diese auskragende flexible Blende 10 ist aus dünnwandigem, flächigem Material ausgebildet. Sie ist oberhalb der oberen Kanten der Falten 2a des Faltenfilterpacks 2 angeordnet und erstreckt sich in einer Ebene, die parallel zur Erstreckungsebene des Faltenfilterpacks angeordnet ist. Die Erstreckungsebene des Faltenfilterpacks wird durch die zwischen den Faltenkanten verlaufende Mittelebene definiert. Im dargestellten Ausführungsbeispiel erstreckt sich der Faltenfilterpack 2 und die flexible Blende 10 jeweils in horizontalen Ebenen.

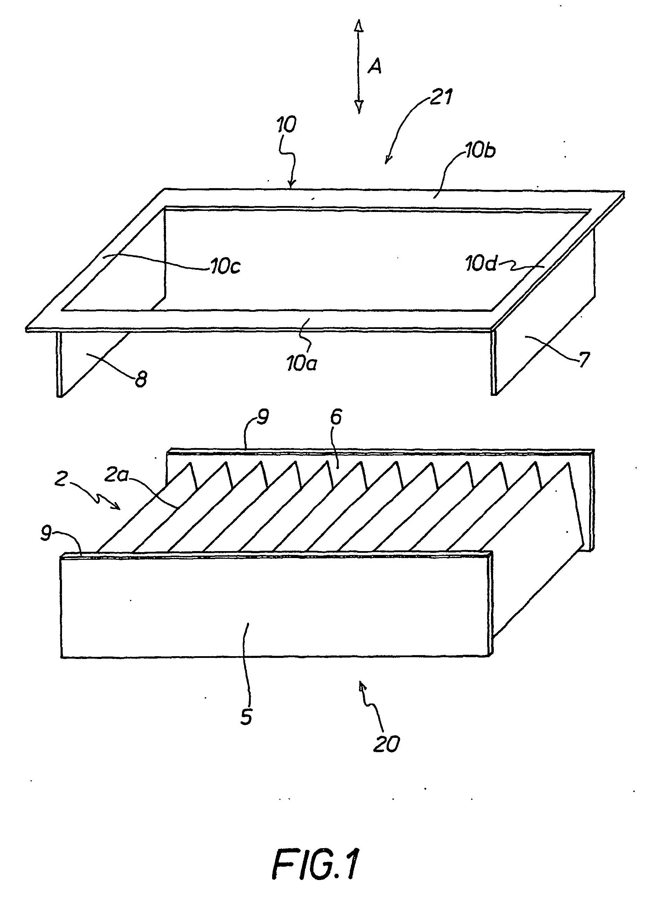

Der Filter 1 ist aus den in der Figur 1 dargestellten Baueinheiten 20, 21 zusammengesetzt.

Die Baueinheit 20 ist gebildet aus dem Faltenfilterpack 2, der aus dem plissierten Filtermaterial besteht. Der Filterpack 2 ist in der senkrecht zur Erstreckungsebene des Filterpacks verlaufenden Richtung flexibel und zwar in beiden Gegenrichtungen, wie dies in Figur 1 durch den Doppelpfeil A angegeben ist. Der Filterpack 2 weist zur Stabilisierung an seinen quer zur Faltung verlaufenden beiden Stirnseiten spezielle Stirnwände 5, 6 auf. Bei diesen Stirnwänden 5, 6 handelt es sich um flexible flächige Randelemente aus Vlies. Die Randelemente sind jeweils streifenförmig und in ihrer Länge und Breite so bemessen, daß sie die die Faltenmündungen aufweisenden Stirnseiten des plissierten Filtermaterials vollständig überdecken, d.h. die Länge der Streifen 5, 6 ist gleich wie oder etwas größer als die Länge des plissierten Filtermaterials und die Höhe der Streifen 5,6 ist gleich groß wie oder etwas größer als die Schichthöhe des plissierten Filtermaterials. Im dargestellten Ausführungsbeispiel, das eine einlagige plissierte Schicht vorsieht, entspricht die Höhe der Streifen 5, 6 der Faltenhöhe des plissierten Materials.

Zur Fixierung der streifenförmigen Randelemente 5, 6 an dem Filtermaterial ist Klebeverbindung mit einem Klebstoff auf Polyolefin-, PES-, PA- oder PU-Basis vorgesehen. Es handelt sich um eine flexible Klebeverbindung, deren Flexibilität durch entsprechende Zusätze, z.B. Harze, eingestellt werden kann. Die Klebeverbindung ist im Überdeckungsbereich zwischen dem Randelement 5 bzw 6 und dem quer zu den Falten 2a verlaufenden Stirnende des Filtermaterials des Faltenfilterpacks 2 ausgebildet.

Die derart zusammengesetzte Baueinheit 20 ist in Richtung Doppelpfeil A biegbar. Die Stauchbarkeit in Längsrichtung ist aufgrund der Fixierung des Filtermaterials an den streifenförmigen Randelementen 5, 6 reduziert. Die streifenförmigen Randelemente 5,6 erlauben somit Flexibilität in Richtung Pfeil A, erbringen jedoch eine gewisse Stabilisierung in Längsrichtung.

Die Baueinheit 21 ist als einstückiges Bauteil ausgebildet. Es handelt sich dabei um einen umlaufenden Rahmen mit im wesentlichen rechteckiger Rahmengrundfläche. Dieses Bauteil bildet die flexible Blende 10. Sie ist als flächiger Rechteckrahmen ausgebildet, bestehend aus zwei in Längsrichtung verlaufenden flächigen Abschnitten 10a, 10b und zwei in Querrichtung verlaufenden flächigen Abschnitten 10c, 10d. Die flächigen Abschnitte 10a bis 10c sind ineinander übergehend, fluchtend in einer gemeinsamen Ebene angeordnet. An den zueinander gewandten Innenseiten der in Querrichtung verlaufenden Abschnitte 10c, 10d sind rechtwinklig nach unten abstehende flächige Frontstege 7, 8 angeformt. Die gesamte Blende 10 mit den flächigen Abschnitten 10a bis 10d mitsamt der Frontstege 7, 8 ist aus Kunststoff als Spritzgußteil ausgebildet, z.B. aus PP mit geringen Talkumanteil. Die Wandstärke ist in allen Abschnitten ungefähr konstant und jeweils relativ dünn. Damit erhält die Blende 10 Flexibilität in Richtung Doppelpfeil A. Eine Stauchung in Längs- und Querrichtung ist insbesondere aufgrund der umlaufenden Rahmenkonstruktion verhindert. Ferner ist aufgrund der nach unten auskragenden Stege 7, 8 Flexibilität um die Längsachse verhindert.

Die Baueinheiten 20 und 21 werden jeweils separat gefertigt und sodann zusammengefügt. Mit dem Zusammenfügen entsteht der Filter 1, wie er in Figur 2 dargestellt ist. Vor dem Zusammenfügen wird auf dem oberen Rand der streifenförmigen Randelemente 5, 6 der Baueinheit 20 Klebstoff in Form eines Klebstoffstreifens 9 aufgetragen, vorzugsweise 2K PU-Kleber oder Schmelzkleber. Das Zusammenfügen erfolgt sodann, indem die Baueinheit 21 auf die Baueinheit 20 aufgesetzt wird. Die Unterseite der flexiblen Blende, d.h. die Unterseite der flächigen Abschnitte 10a bis 10c, kommt dabei in Anlage auf den oberen Rand der streifenförmigen Randelemente 5,6 und/oder auf den dort angeordneten Klebstoffstreifen 9. Über den Klebstoff erfolgt eine Klebeverbindung zwischen den Randelementen 5, 6 und der flexiblen Blende 10.

Die flächigen Frontstege 7 ,8 der Baueinheit 21 sind in ihrer Höhe gleich der Höhe der streifenförmigen Randelemente 5, 6 und damit auch gleich der Höhe des Faltenfilterpacks 2. Sie schließen damit die parallel zu den Falten 2a verlaufenden Stirnseiten des Faltenfilterpacks 2 ab. Über eine Klebeverbindung wird der Faltenfilterpack 2 mit den Frontstegen 7, 8 verbunden, vorzugsweise indem die Endkante der jeweils endständigen dem Frontsteg 7, 8 zugewandten Falte mit dem jeweiligen Frontsteg 7, 8 mittels einem entsprechenden Kleber verbunden wird.

Der derart ausgebildete Filter 1 in seinem zusammengesetzten Zustand, wie er in Figur 2 dargestellt ist, ist flexibel für Verbiegung in Richtung des Doppelpfeils A, d.h. in der Darstellung in der Figur nach oben und nach unten verbiegbar.

Die Durchströmung des Filters erfolgt in Richtung Pfeil B, die parallel zur Biegerichtung A verläuft. Bei der Darstellung in Figur 2 ist also die obere Site des Filters 1 die Anströmseite und die untere Seite des Filters 1 die Abströmseite.Je nach Ausbildung der nicht dargestellten Filteraufnahme, in der der Filter 1 eingesetzt wird, und je nach Ausbildung des Faltenfilterpacks 2, kann die Durchströmung des Filters auch in umgekehrte Richtung, d.h. entgegen Pfeil B erfolgen.

Die Flexibilität des Filters 1 in Richtung Doppelpfeil A erlaubt es, den Filter 1 in gebogenem Zustand in Filteraufnahmen einzuführen. Dieses Einführen des Filters in gebogenem Zustand erleichtert den Einsetzvorgang. Die flexible Blende 10 kann beim Einführen als Führungseinrichtung dienen und nach dem Einsetzen des Filters im Betrieb einen sicheren Halt des Filters 1 in der Filteraufnahme gewährleisten, indem die flexible Blende 10 in einem entsprechenden Auflager in der Filteraufnahme aufliegt oder einrastet. Die Filteraufnahme kann auch eine spezielle Führungsschiene zum Einführen des Filters 1 aufweisen. Beim Einführen kann der Rand der flexiblen Blende 10 in der Führungsschiene geführt werden. Der flexible Filter 1 paßt sich aufgrund seiner Flexibilität an die Form der Filteraufnahme an.

Figur 4 zeigt einen gleich wie das Ausführungsbeispiel in den Figuren 1 und 2 aufgebauten Filter 1, der durch entsprechende flexible Verformung an die nicht dargestellte S-förmige Filteraufnahme angepaßt ist. Der Filter sitzt in der nicht dargestellten vorzugsweise ortsfesten Filteraufnahme. Vorzugsweise greift der Filterpack 2 dabei in eine entsprechende Öffnung der Filteraufnahme ein. Die Stimwandungen 5, 6, 7, 8 liegen dabei an den Wandungen der Filteraufnahmeöffnung an und die flexible Blende liegt an der Außenseite der Filteraufnahme an. Sie kann dabei mit ihrem äußeren Rand in eine entsprechende Fassung der Filteraufnahme eingreifen, um sicherzustellen, daß der Filter 1 in seinem flexibel verformten S-förmigen Einbauzustand verbleibt. Die in die Filteraufnahme eingreifenden Stirnwände 5, 6, 7, 8 des Filters und/oder die im Randbereich der Filteraufnahme aufliegende flexible Blende 10 erbringt eine Abdichtung des Filters 1 in der Filteraufnahme. Zusätzlich können noch separate Dichtungselemente zwischengeschaltet sein. Diese können als separate Dichtelemente lose eingelegt sein oder an der Filteraufnahme oder am Filter, vorzugsweise an der Unterseite der flexiblen Blende 10 oder an der Außenseite der Stimwände 5, 6, 7, 8 angebracht sein.

Bei einem gegenüber den Fig. 1 und 2 abgewandelten Ausführungsbeispielen sind die streifenförmigen flexiblen Randelemente 5, 6 an ihrem oberen Rand nicht mit der flexiblen Blende 10 verklebt und auch nicht in anderer Weise mit dieser fest verbunden.

Die Baueinheit 21 ist mit dem Faltenfilterpack in diesem Falle nur über die Fixierung der Frontstege 7, 8 an den Endfalten verbunden. Bei einem anderen abgewandelten Ausführungsbeispiel können auf der Oberseite des Faltenfilterpacks quer zur Faltung und somit in Längsrichtung des Faltenfilterpacks verlaufende parallele Armierungsstreifen, z.B. über Verkleben fixiert sein. Diese Armierungsstreifen können aus gleichem oder ähnlichem Material wie die streifenförmigen Randelemente 5, 6 ausgebildet sein. Sie sind insbesondere dann von Vorteil, wenn die an den Faltenfilterpack fixierten Randelemente 5, 6 nicht mit der auskragenden Blende 10 verbunden sind.

## Patentansprüche

1. Filter zur Filtration eines Fluidstroms, insbesondere zur Filtration eines Luftstromes, z.B. eines Luftstromes, der dem Fahrgastraum eines Kraftfahrzeuges zugeführt wird,
mit einem flexiblen Faltenfilterpack aus plissiertem flexiblen Filtermedium, z.B. Filterpapier, Filtervlies o.dgl..
wobei an gegenüberliegenden, quer zu den Falten des Filtermediums verlaufenden Stirnseiten des Faltenfilterpacks jeweils ein flexibles, streifenförmiges Randelement angeordnet ist, das sich quer zu den Faltenmündungen, diese zumindest abschnittsweise überdeckend, erstreckt und dabei an dem Filtermedium in dem Überdeckungsbereich fixiert ist,
wobei eine um den gesamten Umfang des Faltenfilterpacks (2) umlaufende oder eine zumindest an beiden quer zu den Faltenmündungen sich erstreckenden Längsseiten angrenzende nach außen auskragende flexible Blende (10, 10a, 10b, 10c, 10d; 30, 30a, 30b) ausgebildet ist, deren Erstreckungsfläche parallel zur Erstreckungsfläche des Faltenfilterpacks (2) gerichtet oder mit dieser fluchtend angeordnet ist,
**dadurch gekennzeichnet,**
**daß** die nach außen auskragende flexible Blende (10, 10a, 10b, 10c, 10d; 30, 30a, 30b) mit einander gegenüberliegenden Frontstegen (7, 8) einstückig unter Ausbildung eines einstückigen Kunststoffspritzgußrahmens (21) verbunden ist,
wobei die Frontstege (7, 8) im wesentlichen senkrecht zur Erstreckungsfläche der nach außen auskragenden flexiblen Blende (10, 10a, 10b, 10c, 10d; 30, 30a, 30b) auskragend abstehen und so angeordnet sind, daß bei zusammengebautem Filter, wenn der Kunststoffsspritzgußrahmen (21) an dem Faltenfilterpack (2) montiert ist, je ein Frontsteg (7, 8) an längs zu den Falten verlaufenden Stirnseiten des Faltenfilterpacks im Bereich der jeweiligen endständigen Falte angeordnet ist.

2. Filter nach Anspruch 1
**dadurch gekennzeichnet,**
**daß** der Frontsteg (7,8) mit der endständigen Falte (2a) des Filtermediums (2) verbunden ist.

3. Filter nach einem der vorangehenden Ansprüche,
**dadurch gekennzeichnet,**
**daß** der Frontsteg (7, 8) sich Ober die gesamte Höhe des Faltenfilterpacks (2) erstreckt.

4. Filter nach einem der vorangehenden Ansprüche,
**dadurch gekennzeichnet,**
**daß** das flexible Randelement (5, 6) und der Frontsteg (7, 8) gleich hoch ausgebildet sind.

5. Filter nach einem der vorangehenden Ansprüche,
**dadurch gekennzeichnet,**
**daß** das flexible Randelement (5, 6) die Faltenmündungen an der Stirnseite des Faltenfilterpacks (2) jeweils über die gesamte Höhe überdeckt,
vorzugsweise die gesamte Höhe der Stirnseite des plissierten Filtermaterialss (2) und/oder die gesamte Höhe der betreffenden Stirnseite des Faltenfilterpacks (2) überdeckt.

6. Filter nach einem der vorangehenden Ansprüche,
**dadurch gekennzeichnet,**
**daß** der Frontsteg (7, 8) mit den beiden flexiblen Randelementen (5, 6) verbunden ist

7. Filter nach einem der vorangehenden Ansprüche,
**dadurch gekennzeichnet,**
**daß** die nach außen auskragende flexible Blende (10) mit dem flexiblen Randelement (5, 6) und/oder mit dem Filtermedium (2) verbunden Ist.

8. Filter nach einem der vorangehenden Ansprüche,
**dadurch gekennzeichnet,**
**daß** die nach außen auskragende flexible Blende an der Anströmseite oder an der Abströmseite des Faltenfilterpacks (2) oder im Bereich zwischen der Anströmseite und der Abströmseite des Faltenfilterpacks (2) angeordnet ist, vorzugsweise am anströmseitigen Rand bzw. am abströmseitigen Rand des flexiblen Randelementes (5, 6).

9. Filter nach einem der vorangehenden Ansprüche,
**dadurch gekennzeichnet,**
**daß** das flexible Randelement (5, 6) aus Schaum, z.B. PU-Schaum oder aus Vlies, insbesondere aus PES, PA, Polyolefin-Fasern oder deren Mischungen, insbesondere Bikomponenten, ausgebildet ist

10. Filter nach einem der vorangehenden Ansprüche,
**dadurch gekennzeichnet,**
**daß** die flexible Blende aus gegenüber dem Filtermedium anderem Material, z.B. PP mit Talkumanteil ausgebildet ist.

11. Filter nach einem der vorangehenden Ansprüche,
**dadurch gekennzeichnet,**
**daß** die flexible Blende (10) mit dem flexiblen Randelement (5, 6) bzw. dem Filtermedium über eine Klebeverbindung, z.B. 2K PU-Kleber oder Schmelzkleber, verbunden ist.

12. Filter nach einem der vorangehenden Ansprüche,
**dadurch gekennzeichnet,**
**daß** das flexible Randelement (5, 6) mit dem Filtermedium (2) über eine Klebeverbindung, z.B. einen Klebstoff aus Polyolefin-, PES-, PA- oder PU-Basis, vorzugsweise mit Flexibilitätszusatz, z.B. Harz, verbunden ist.

13. Filter nach Anspruch 11 oder 12,
**dadurch gekennzeichnet,**
**daß** die Klebeverbindung als abdichtende und/oder elastische Verbindung ausgebildet ist.

14. Filtereinrichtung für die Filtration eines Fluidstromes, vorzugsweise im Fahrgastraum eines Kraftfahrzeugs angeordnet, zur Filtration eines Luftstromes, der dem Fahrgastraum zugeführt wird, mit einem Filter nach einem der vorangehenden Ansprüche,
**dadurch gekennzeichnet,**
**daß** die Filtereinrichtung eine Filteraufnahme, die von dem Fluidstrom bzw. dem Luftstrom durchströmt wird, aufweist, in der der Filter (1) mit dem Faltenfilterpack (2) eingesetzt ist, wobei die nach außen auskragende flexible Blende (10) mit der Filteraufnahme zusammenwirkt

15. Filtereinrichtung nach Anspruch 14,
**dadurch gekennzeichnet,**
**daß** die Blende (10) auf einer Auflagerfläche im Bereich der Filteraufnahme, vorzugsweise an der Außenseite der Filteraufnahme und/oder in einer Ausnehmung im Bereich der Filteraufnahme aufliegt.

16. Filtereinrichtung nach Anspruch 14 oder 15,
**dadurch gekennzeichnet,**
**daß** die nach außen auskragende flexible Blende (10) und/oder das flexible Randelement (5, 6) gegenüber der Filteraufnahme dicht angeordnet sind bzw. ist, vorzugsweise selbst gegenüber der Filteraufnahme abdichtend ausgebildet sind bzw. ist

17. Filtereinrichtung nach einem der Ansprüche 14 bis 16,
**dadurch gekennzeichnet,**
**daß** der Filter (11) in elastisch verbogener Stellung in der Filteraufnahme angeordnet ist, vorzugsweise mit parallel zur Faltung des Filtermediums verlaufender Abbiegung oder verlaufenden Abbiegungen, z.B. S-förmig gebogen.

18. Verfahren zur Herstellung eines Filters mit einem flexiblen Faltenfilterpack aus plissiertem flexiblen Filtermedium, z.B. Filterpapier, Filtervlies o.dgl., vorzugsweise eines Filters nach einem der Ansprüche 1 bis 13,
**dadurch gekennzeichnet,**
**daß** in einem ersten Schritt an gegenüberliegenden quer zu den Falten verlaufenden Stirnseiten des Faltenfilterpacks jeweils ein flexibles streifenförmiges Randelement fixiert wird und sodann im zweiten Schritt an dem flexiblen streifenförmigen Randelement und/oder an dem Filtermedium eine nach außen auskragende flexible Blende fixiert wird, die im Bereich mindestens eines der flexiblen Randelemente parallel oder fluchtend zur Erstreckungsfläche des Faltenfilterpacks nach außen, in Richtung vom Faltenfilterpack weg auskragt und im wesentlichen senkrecht zur Erstreckungsfläche der nach außen auskragenden flexiblen Blende auskragend abstehende Frontstege aufweist,
wobei vorgesehen ist, daß der Faltenfilterpack mit den daran angeordneten flexiblen streifenförmigen Randelementen als separate erste Baueinheit gefertigt wird und die nach außen auskragende flexible Blende mit den auskragend abstehenden Frontstegen als separate zweite Baueinheit gefertigt wird und sodann der Filter unter Kombination der ersten Baueinheit mit der zweiten Baueinheit gefertigt wird.

## Claims

1. Filter for filtering a stream of fluid, in particular for filtering a stream of air, for example a stream of air that is supplied to the passenger compartment of a motor vehicle, with a flexible folded filter assembly of pleated flexible filter medium, for example filter paper, filter nonwoven or the like, a flexible strip-shaped bordering element respectively being arranged on opposite end sides of the folded filter assembly, running transversely in relation to the folds of the filter medium, which bordering element extends transversely in relation to the openings of the folds, at least partially covering them, and being fixed on the filter medium in the covering region, an outwardly projecting flexible surround (10, 10a, 10b, 10c, 10d; 30, 30a, 30b) being formed, running around the entire periphery of the folded filter assembly (2) or adjoining at least both longitudinal sides extending transversely in relation to the openings of the folds, the area of extent of which surround is directed parallel to the area of extent of the folded filter assembly (2) or is arranged in line with the latter, **characterized in that** the outwardly projecting flexible surround (10, 10a, 10b, 10c, 10d; 30, 30a, 30b) is connected in one piece to front webs (7, 8) lying opposite each other, thereby forming a one-piece injection-moulded plastic frame (21), the front webs (7, 8) protruding in a projecting manner essentially perpendicularly in relation to the area of extent of the outwardly projecting flexible surround (10, 10a, 10b, 10c, 10d; 30, 30a, 30b) and being arranged in such a way that, on the assembled filter, when the injection-moulded plastic frame (21) is mounted on the folded filter assembly (2), a front web (7, 8) is respectively arranged on end sides of the folded filter assembly running longitudinally in relation to the folds, in the region of the respective end fold.

2. Filter according to Claim 1, **characterized in that** the front web (7, 8) is connected to the end fold (2a) of the filter medium (2).

3. Filter according to one of the preceding claims, **characterized in that** the front web (7, 8) extends over the entire height of the folded filter assembly (2).

4. Filter according to one of the preceding claims, **characterized in that** the flexible bordering element (5, 6) and the front web (7, 8) are formed with the same height.

5. Filter according to one of the preceding claims, **characterized in that** the flexible bordering element (5, 6) covers the openings of the folds on the end side of the folded filter assembly (2) in each case over the entire height, preferably covering the entire height of the end side of the pleated filter material (2) and/or the entire height of the relevant end side of the folded filter assembly (2).

6. Filter according to one of the preceding claims, **characterized in that** the front web (7, 8) is connected to the two flexible bordering elements (5, 6).

7. Filter according to one of the preceding claims, **characterized in that** the outwardly projecting flexible surround (10) is connected to the flexible bordering element (5, 6) and/or to the filter medium (2).

8. Filter according to one of the preceding claims, **characterized in that** the outwardly projecting flexible surround is arranged on the inflow side or the outflow side of the folded filter assembly (2) or in the region between the inflow side and the outflow side of the folded filter assembly (2), preferably at the border on the inflow side or at the border on the outflow side of the flexible bordering element (5, 6).

9. Filter according to one of the preceding claims, **characterized in that** the flexible bordering element (5, 6) is made of foam, for example PU foam or a nonwoven, in particular of PES, PA, polyolefin fibres or their mixtures, in particular bicomponents.

10. Filter according to one of the preceding claims, **characterized in that** the flexible surround is made of a different material than the filter medium, for example PP with a talc content.

11. Filter according to one of the preceding claims, **characterized in that** the flexible surround (10) is connected to the flexible bordering element (5, 6) and the filter medium by means of an adhesive connection, for example 2-component PU adhesive or hotmelt adhesive.

12. Filter according to one of the preceding claims, **characterized in that** the flexible bordering element (5, 6) is connected to the filter medium (2) by means of an adhesive connection, for example an adhesive based on polyolefin, PES, PA or PU, preferably with a flexibility additive, for example resin.

13. Filter according to Claim 11 or 12, **characterized in that** the adhesive connection is formed as a sealing and/or elastic connection.

14. Filter device for filtering a stream of fluid, preferably arranged in the passenger compartment of a motor vehicle, for filtering a stream of air that is supplied to the passenger compartment, with a filter according to one of the preceding claims, **characterized in that** the filter device has a filter holder, which is flowed through by the stream of fluid or the stream of air and in which the filter (1) is fitted with the folded filter assembly (2), the outwardly projecting flexible surround (10) interacting with the filter holder.

15. Filter device according to Claim 14, **characterized in that** the surround (10) rests on a supporting surface in the region of the filter holder, preferably on the outer side of the filter holder and/or in a recess in the region of the filter holder.

16. Filter device according to Claim 14 or 15, **characterized in that** the outwardly projecting flexible surround (10) and/or the flexible bordering element (5, 6) are or is arranged with a sealing effect with respect to the filter holder, preferably are or is themselves/itself formed in a sealing manner with respect to the filter holder.

17. Filter device according to one of Claims 14 to 16, **characterized in that** the filter (11) is arranged in an elastically bent position in the filter holder, preferably with a bend or bends running parallel to the folding of the filter medium, for example bent in an S-shaped manner.

18. Method for producing a filter with a flexible folded filter assembly of pleated flexible filter medium, for example filter paper, filter nonwoven or the like, preferably a filter according to one of Claims 1 to 13, **characterized in that**, in a first step, a flexible strip-shaped bordering element is respectively fixed on opposite end sides of the folded filter assembly, running transversely in relation to the folds, and then, in the second step, an outwardly projecting flexible surround is fixed to the flexible strip-shaped bordering element and/or to the filter medium, which surround projects outwards, in a direction away from the folded filter assembly, in the region of at least one of the flexible bordering elements, parallel or in line with the area of extent of the folded filter assembly, and has front webs protruding such that they project substantially perpendicularly in relation to the area of extent of the outwardly projecting flexible surround, it being provided that the folded filter assembly with the flexible strip-shaped bordering elements arranged on it is produced as a separate first structural unit and the outwardly projecting flexible surround with the front webs protruding in a projecting manner is produced as a separate, second structural unit, and then the filter is produced by combining the first structural unit with the second structural unit.

## Revendications

1. Filtre destiné au filtrage d'un flux de fluide, en particulier destiné au filtrage d'un courant d'air, par exemple d'un courant d'air, qui est amené à l'intérieur d'un véhicule automobile, avec un paquet de filtres à structure plissée flexible composé d'un milieu filtrant flexible plissé, par exemple un papier-filtre, un non-tissé filtrant ou équivalent, dans lequel un élément de bordure flexible, de préférence en forme de bande est disposé à chaque fois au niveau des faces terminales opposées du paquet de filtres à structure plissée évoluant en travers des plis du milieu filtrant, ledit élément de bordure s'étendant en travers des ouvertures de plis en recouvrant pour le moins par sections celles-ci, et étant ce faisant fixé au milieu filtrant dans la zone de recouvrement, un diaphragme flexible en saillie vers l'extérieur (10, 10a, 10b, 10c, 10d ; 30, 30a, 30b) entourant l'ensemble de la périphérie du paquet de filtres à structure plissée (2) ou un pour le moins attenant au niveau des deux côtés longitudinaux s'étendant en travers des ouvertures de plis étant réalisé, dont la surface d'extension est orientée parallèlement à la surface d'extension du paquet de filtres à structure plissée (2) ou disposée en alignement avec celle-ci, **caractérisé en ce que** le diaphragme flexible en saillie vers l'extérieur (10, 10a, 10b, 10c, 10d ; 30, 30a, 30b) est relié d'une seule pièce avec des traverses frontales opposées les unes aux autres (7, 8) en formant un cadre en plastique injecté monobloc (21), dans lequel les traverses frontales (7, 8) sont écartées en saillie pour l'essentiel perpendiculairement à la surface d'extension du diaphragme flexible en saillie vers l'extérieur (10, 10a, 10b, 10c, 10d ; 30, 30a, 30b) et sont disposées de telle manière qu'en cas de filtre assemblé, lorsque le cadre en plastique injecté (21) est monté sur le paquet de filtres à structure plissée (2), une traverse frontale (7, 8) est disposée à chaque fois au niveau des faces terminales du paquet de filtres à structure plissée évoluant le long des plis dans la zone du pli terminal correspondant.

2. Filtre selon la revendication 1, **caractérisé en ce que** la traverse frontale (7, 8) est reliée avec le pli terminal (2a) du milieu filtrant (2).

3. Filtre selon l'une quelconque des revendications précédentes, **caractérisé en ce que** la traverse frontale (7, 8) s'étend sur l'ensemble de la hauteur du paquet de filtres à structure plissée (2).

4. Filtre selon l'une quelconque des revendications précédentes, **caractérisé en ce que** l'élément de bordure flexible (5, 6) et la traverse frontale (7, 8) sont réalisés avec la même hauteur.

5. Filtre selon l'une quelconque des revendications précédentes, **caractérisé en ce que** l'élément de bordure flexible (5, 6) recouvre les ouvertures de plis au niveau de la face terminale du paquet de filtres à structure plissée (2) à chaque fois sur l'ensemble de la hauteur, de préférence sur l'ensemble de la hauteur de la face terminale du matériau filtrant plissé (2) et/ou recouvre l'ensemble de la hauteur de la face terminale concernée du paquet de filtres à structure plissée (2).

6. Filtre selon l'une quelconque des revendications précédentes, **caractérisé en ce que** la traverse frontale (7, 8) est reliée avec les deux éléments de bordure flexibles (5, 6).

7. Filtre selon l'une quelconque des revendications précédentes, **caractérisé en ce que** le diaphragme flexible en saillie vers l'extérieur (10) est relié avec l'élément de bordure flexible (5, 6) et/ou avec le milieu filtrant (2).

8. Filtre selon l'une quelconque des revendications précédentes, **caractérisé en ce que** le diaphragme flexible en saillie vers l'extérieur est disposé au niveau du côté afflux ou au niveau du côté évacuation du paquet de filtres à structure plissée (2) ou dans la zone entre le côté afflux et le côté évacuation du paquet de filtres à structure plissée (2), de préférence au niveau de la bordure côté afflux ou au niveau de la bordure côté évacuation de l'élément de bordure flexible (5, 6).

9. Filtre selon l'une quelconque des revendications précédentes, **caractérisé en ce que** l'élément de bordure flexible (5, 6) est réalisé en mousse, par exemple en mousse de PU ou en non-tissé, en particulier en PES, en PA, en fibres de polyoléfine ou leurs mélanges, en particulier des bicomposants.

10. Filtre selon l'une quelconque des revendications précédentes, **caractérisé en ce que** le diaphragme flexible est réalisé en un autre matériau que celui du milieu filtrant, par exemple du PP avec portion de talc.

11. Filtre selon l'une quelconque des revendications précédentes, **caractérisé en ce que** le diaphragme flexible (10) est relié avec l'élément de bordure flexible (5, 6) ou le milieu filtrant par l'intermédiaire d'un assemblage collé, par exemple de la colle PU 2K ou de la colle fusible.

12. Filtre selon l'une quelconque des revendications précédentes, **caractérisé en ce que** l'élément de bordure flexible (5, 6) est relié avec le milieu filtrant (2) par l'intermédiaire d'un assemblage collé, par exemple une substance adhésive à base de polyoléfine, de PES, de PA ou de PU, de préférence avec additif de flexibilité, par exemple de la résine.

13. Filtre selon la revendication 11 ou 12, **caractérisé en ce que** l'assemblage collé est réalisé sous forme d'assemblage étanche et/ou élastique.

14. Dispositif filtrant pour la filtration d'un flux de fluide, disposé de préférence à l'intérieur d'un véhicule automobile, en vue du filtrage d'un courant d'air, qui est amené à l'intérieur, avec un filtre selon l'une quelconque des revendications précédentes, **caractérisé en ce que** le dispositif filtrant présente un logement de filtre, qui est traversé par le flux de fluide ou par le courant d'air, dans lequel le filtre (1) est employé avec le paquet de filtres à structure plissée (2), le diaphragme flexible en saillie vers l'extérieur (10) coopérant avec le logement de filtre.

15. Dispositif filtrant selon la revendication 14, **caractérisé en ce que** le diaphragme (10) repose sur une surface d'appui dans la zone du logement de filtre, de préférence au niveau de la face externe du logement de filtre et/ou dans un évidement dans la zone du logement de filtre.

16. Dispositif filtrant selon la revendication 14 ou 15, **caractérisé en ce que** le diaphragme flexible en saillie vers l'extérieur (10) et/ou l'élément de bordure flexible (5, 6) est ou sont disposé(s) de manière hermétique par rapport au logement de filtre, est ou sont de préférence réalisé(s) de manière étanche même par rapport au logement de filtre.

17. Dispositif filtrant selon l'une quelconque des revendications 14 à 16, **caractérisé en ce que** le filtre (11) est disposé en position déformée élastiquement dans le logement de filtre, de préférence avec obliquité ou obliquités évoluant parallèlement au pliage du milieu filtrant, par exemple incurvé en forme de S.

18. Procédé de fabrication d'un filtre avec un paquet de filtres à structure plissée flexible composé d'un milieu filtrant flexible plissé, par exemple d'un papier-filtre, d'un non-tissé filtrant ou équivalent, de préférence d'un filtre selon l'une quelconque des revendications 1 à 13, **caractérisé en ce que** dans une première étape, un élément de bordure flexible en forme de bande est fixé à chaque fois sur les faces terminales opposées du paquet de filtres à structure plissée évoluant en travers des plis, et ensuite, dans la seconde étape, un diaphragme flexible en saillie vers l'extérieur est fixé sur l'élément de bordure flexible en forme de bande et/ou sur le milieu filtrant, ledit diaphragme faisant saillie vers l'extérieur dans la zone d'au moins un des éléments de bordure flexibles parallèlement ou en alignement avec la surface d'extension du paquet de filtres à structure plissée, dans la direction du paquet de filtres à structure plissée, et présente des traverses frontales écartées en saillie pour l'essentiel perpendiculairement à la surface d'extension du diaphragme flexible en saillie vers l'extérieur, étant prévu que le paquet de filtres à structure plissée est fabriqué avec les éléments de bordure flexibles en forme de bande disposés dessus sous forme de première unité modulaire séparée et le diaphragme flexible en saillie vers l'extérieur est fabriqué avec les traverses terminales écartées en saillie sous forme de seconde unité modulaire séparée, et ensuite, le filtre est fabriqué en combinant la première unité modulaire avec la seconde unité modulaire.
